# EUROPÄISCHE PATENTSCHRIFT

(11) **EP 2 775 579 B1**
(45) Veröffentlichungstag und Bekanntmachung des Hinweises auf die Patenterteilung: **11.04.2018**
(21) Anmeldenummer: 14156702.4
(22) Anmeldetag: 26.02.2014
(51) Int. Cl.: H02G 3/06, H02G 3/08

(54) **Kabeldurchführung zur Durchführung sowie Zugentlastung und Abdichtung eines Kabels**
Cable feedthrough for feeding through , strain relieving and sealing a cable
Passage de câbles pour le passage, la décharge de traction et l'étanchéification d'un câble

(30) Priorität: 05.03.2013 DE 202013002059 U
(43) Veröffentlichungstag der Anmeldung: 10.09.2014
(73) Patentinhaber: WISKA Hoppmann GmbH, 24568 Kaltenkirchen (DE)
(72) Erfinder: Gehre, Peter, D-22529 Hamburg (DE)
(74) Vertreter: Eisenführ Speiser

(56) Entgegenhaltungen:
- WO-A1-82/01296
- DE-A1- 4 325 420
- DE-A1-102008 000 479
- FR-A1- 2 309 054

## Beschreibung

Die Erfindung betrifft eine Kabeldurchführung zur Ein- und Durchführung eines Kabels durch eine Bohrung in einer Gehäusewandung sowie Abdichtung und Zugentlastung des Kabels, umfassend ein Stutzenelement, welches eine Achse umgibt, mit einem Klemmabschnitt zur Halterung eines Kabels mit einer Innenfläche, die einen Klemmabschnitt-Innendurchmesser aufweist, und einem Dichtabschnitt, welcher ausgebildet ist, das Kabel mit dem Gehäuse abzudichten, und ein Aufnahmeelement, mit einem Befestigungsbereich zur mechanischen Befestigung an dem Stutzenelement und einem Klemmbereich zur Zusammenwirkung mit dem Stutzenelement solcherart, dass bei Befestigung des Aufnahmeelements an dem Stutzenelement der Klemmabschnitt-Innendurchmesser aus einer ersten Durchmesserabmessung zumindest über Abschnitte des Umfangs der Innenfläche in eine zweite Durchmesserabmessung gebracht wird, die kleiner als die erste Durchmesserabmessung ist, wobei das Stutzenelement eine Einführhülse aufweist, die ausgebildet ist, den Klemmabschnitt in eine Aufnahmeposition in Achsenrichtung relativ zu dem Aufnahmeelement zu stellen, und die mittels eines Verbindungsmittels mit dem Aufnahmeelement verbindbar ist.
Aus DE 10 2008 000 479 A1 oder DE 43 25 420 A1 ist eine Steckvorrichtung bekannt, die an einem Gehäuse angebracht werden kann. Entlang einer Axialrichtung eines Klemmkorbs mit radial beweglichen Klemmzungen kann ein Kabel in das Gehäuse geführt werden. Eine Drehhülse ist dabei drehbeweglich aber axial feststehend am Gehäuse gelagert. Die Drehhülse weist ein Innengewinde auf, durch das der Klemmkorb axial bewegt werden kann, wenn die Drehhülse gedreht wird. Durch Bewegen des Klemmkorbs in axialer Richtung wird auf die radiale Position der Klemmzungen eingewirkt, nämlich indem die Außenflächen der Klemmzungen bei einer axialen Verschiebebewegung des Klemmkorbs mit dem Gehäuse zusammenwirken. Im Innern des Klemmkorbs ist eine Dichtmanschette angeordnet, die mit einer ringförmigen Trägerwand des Klemmkorbs verbunden ist.

Vor diesem Hintergrund ist es Aufgabe der Erfindung eine Kabeldurchführung so auszugestalten, dass eine Abdichtung des Kabels unabhängig von der Zugentlastung ermöglicht wird.

Dieses Aufgabe wir erfindungsgemäß gelöst durch eine Kabeldurchführung der eingangs genannten Art, die sich dadurch auszeichnet, dass der Dichtabschnitt in Achsenrichtung beabstandet von dem Klemmabschnitt angeordnet ist.

Die erfindungsgemäße Kabeldurchführung dient zum Ein- und Durchführen eines Kabels durch eine Bohrung in einer Gehäusewandung. Das Gehäuse kann beispielsweise ein steifes Kunststoffgehäuse sein, in das ein Kabel einzuführen ist, beispielsweise um eine Stromversorgung innerhalb des Gehäuses zu ermöglichen. Dabei ist es wünschenswert, dass das Kabel im Bereich der Gehäusebohrung mittels einer Kabeldurchführung in das Gehäuse eingeführt wird, da es sonst durch eine scharfe Kante an der Gehäusewandung zu Abrieb der Kabelisolierung kommen kann. Zudem ist eine Zugentlastung des Kabels wünschenswert. Ein in das Gehäuse eingeführtes Kabel, welches innerhalb des Gehäuses lediglich mittels elektrischer Kontakte befestigt ist, kann bei starker Zugbelastung leicht abreißen. Diese Zugentlastung wird durch den Klemmabschnitt erzielt, welcher das Kabel in einer festen Position relativ zum Gehäuse hält. Schließlich ist ein Abdichten des Kabels mit dem Gehäuse wünschenswert, insbesondere um das Gehäuse-Innere vor dem Eintritt von Flüssigkeit zu schützen. Diese Abdichtung wird durch den Dichtabschnitt bewirkt.

Die Einführhülse dient einerseits dazu, den Klemmabschnitt in eine Aufnahmeposition, d.h. eine Position des Klemmabschnitts in Aufnahme innerhalb des Aufnahmeelements, in Achsenrichtung relativ zu dem Aufnahmeelement zu stellen. Je nach Aufnahmeposition wird dabei der Klemmabschnitt-Innendurchmesser in die zweite Durchmesserabmessung gebracht und das Kabel mittels des Klemmabschnitts eingeklemmt. Das Stutzenelement erfüllt hierbei die Funktion eines Klemmelements. Das Aufnahmeelement wird üblicherweise auch als Hutmutter bezeichnet.

Die Erfindung hat erkannt, dass bei den aus dem Stand der Technik bekannten Kabeldurchführungen der eingangs genannten Art die Dichtung jeweils an einer dem zu klemmenden Kabel zugewandten Oberfläche des Klemmabschnitts angeordnet ist. Vor dem Hintergrund des Standes der Technik erschien diese Anordnung vorteilhaft, da vermeintlich mittels eines einzigen Elements sowohl die Klemm- als auch die Dichtwirkung erzielt werden konnte. Jedoch wird danach eine Abdichtung des Kabels allein dann erzielt, wenn der Klemmabschnitt in eine Klemmposition verbracht ist, so dass die Dichtung dichtend an dem Kabel anliegt. Die erfindungsgemäße Lösung geht im Gegensatz dazu einen neuen Weg, indem der Dichtabschnitt von dem Klemmabschnitt getrennt angeordnet wird. Dadurch wird eine Abdichtung zwischen Kabel und Kabeldurchführung unabhängig davon erreicht, ob der Klemmabschnitt bereits in der Klemmposition ist. Dies hat auch den Vorteil, dass eine Abdichtung bereits erzielt wird, wenn die Kabeldurchführung noch nicht gänzlich montiert ist.

Vorzugsweise ist vorgesehen, dass die Einführhülse einen Halteabschnitt zum Einführen in eine Gehäusebohrung aufweist, insbesondere eine dem Aufnahmeelement in Achsenrichtung abgewandte Haltehülse. Vorzugsweise weist der Halteabschnitt ein Außengewinde auf, welches nach dem Einführen in die Gehäusebohrung durch die Gehäusewandung ragt. An der dem Aufnahmeelement abgewandten Seite der Gehäusewandung wird vorzugsweise eine Mutter auf das Außengewinde des Halteabschnitts aufgeschraubt, wodurch die Kabeldurchführung fest mit der Gehäusewandung verbunden wird.

Für die Montage wird das Kabel im Wesentlichen entlang der Achse durch die Mutter, das Stutzenelement und das Aufnahmeelement geschoben. Beim Durchschieben des Kabels durch das Stutzenelement durchläuft es den Dichtabschnitt und den Klemmabschnitt. Im montierten Zustand ragt das Stutzenelement in das Aufnahmeelement hinein. An einer der Gehäusewandung im montierten Zustand abgewandten Seite des Stutzelements ragt das Kabel aus dem Aufnahmeelement heraus. Im montierten Zustand wird die Kabeldurchführung an der Gehäusewandung gehalten, indem die Gehäusewandung im Wesentlichen zwischen Einführhülse und einer auf den Außengewinde des Halteabschnitts aufgedrehten Mutter eingeklemmt ist.

Weiterhin umfasst der Dichtabschnitt vorzugsweise eine Elastomer-Membran oder besteht aus dieser zur Abdichtung gegen das Kabel. Vorzugsweise ist die Elastomer-Membran ausgebildet ist, das Kabel dichtend zu umgeben. Weiter vorzugsweise erstreckt sich in Achsenrichtung ausgehend von dem Klemmabschnitt ein Ringabschnitt. Dabei erstreckt sich die Elastomer-Membran bevorzugt radial ausgehend von einem dem Klemmabschnitt abgewandten Ende des Ringabschnitts nach Innen. Die Elastomer-Membran weist eine Ausnehmung auf, die im Wesentlichen kreisförmig ausgebildet ist und einen Durchmesser aufweist, der kleiner als der Durchmesser eines durchzuführenden Kabels ist. Dadurch umgibt die Elastomer-Membran das Kabel elastisch dichtend. Mit anderen Worten: wenn das Kabel in die Kabeldurchführung eingeführt wird, wird eine Abdichtung zwischen Kabel und Kabeldurchführung direkt und unabhängig davon erzielt, ob der Klemmabschnitt in einer Klemmposition ist. Die Abdichtung erfolgt mittels der Elastomer-Membran, die das Kabel elastisch umgebend einklemmt. Die Ausbildung des Dichtabschnitts als Elastomer-Membran hat zudem den Vorteil, dass das Kabel besonders einfach in die Kabeldurchführung eingeführt werden kann. Wird das Kabel nämlich nicht exakt zentral eingeführt, wölbt sich die Elastomer-Membran in Reaktion auf das Kabel derart, dass das Kabel - ohne besondere Geschicklichkeit des Anwenders - entlang der Elastomer-Membran in die Ausnehmung und damit weiter durch die Kabeldurchführung geführt wird.

Nach einer weiteren bevorzugten Ausgestaltung der erfindungsgemäßen Kabeldurchführung ist der Dichtabschnitt an das Stutzenelement angespritzt. Bevorzugt ist der Dichtabschnitt in Form einer Elastomer-Membran, wie oben beschrieben, an den Ringabschnitt des Stutzenelements angespritzt.

Weiterhin ist bevorzugt, dass der Klemmabschnitt sich in Achsenrichtung erstreckende Klemmzungen umfasst oder aus diesen besteht, wobei die Klemmzungen elastisch, radial beweglich ausgebildet sind. Vorzugsweise bilden die Klemmzungen den erfindungsgemäßen Klemmabschnitt und erstrecken sich ausgehend von einem Ringabschnitt, wie oben beschrieben. Dabei sind die Klemmzungen bevorzugt aus einem elastischen Material, beispielsweise Polyamid, Polyethylen, PVC, etc., gebildet. Die nach Innen gerichteten Flächen der Klemmzungen bilden vorzugsweise jeweils Teilabschnitte einer Innenfläche. Die Klemmzungen erstrecken sich bevorzugt ausgehend von einem Ringabschnitt, wie oben beschrieben, in einer dem Dichtabschnitt des Stutzenelements abgewandten Achsenrichtung. Zudem können die nach Innen gerichteten Flächen der Klemmzungen einen - im Vergleich zu weiteren Oberflächen der Kabeldurchführung - erhöhten Reibungskoeffizienten aufweisen. Dadurch wird die Klemmwirkung der Klemmzungen erhöht.

Gemäß einer weiteren bevorzugten Ausgestaltung der erfindungsgemäßen Kabeldurchführung weist der Klemmbereich des Aufnahmeelements eine angeschrägte Innenfläche auf, die mit dem Stutzenelement solcherart zusammenwirkt, dass bei Aufnahme des Stutzenelements in das Aufnahmeelement der Klemmabschnitt-Innendurchmesser aus der ersten Durchmesserabmessung zumindest über Abschnitte des Umfangs der Innenfläche in die zweite Durchmesserabmessung gebracht wird. Die angeschrägte Innenfläche ist dabei vorzugsweise konisch geformt und in einem Abschnitt ausgebildet, der sich in Achsenrichtung an einen Gewindeabschnitt des Aufnahmeelements anschließt. Dabei erstreckt sich die Innenfläche ausgehend von dem Gewindeabschnitt konisch nach Innen.

Die angeschrägte Innenfläche des Aufnahmeelements wirkt vorzugsweise mit den Au-βenflächen der Klemmzungen zusammen, wobei die Außenflächen vorzugsweise angeschrägt sind. D.h. die Außenflächen der Klemmzungen sind vorzugsweise im Wesentlichen korrespondierend zu der angeschrägten Innenfläche des Aufnahmeelements ausgebildet. Je weiter das Stutzenelement in Achsenrichtung in das Aufnahmeelement eingeführt wird, desto weiter werden die Klemmzungen nach Innen gedrückt.

Es ist weiterhin bevorzugt/vorgesehen, dass die Einführhülse integral mit dem Klemmabschnitt ausgebildet ist. Der Begriff "integral" ist im Rahmen der vorliegenden Erfindung derart zu verstehen, dass die Einführhülse einstückig mit dem Klemmabschnitt und zudem bevorzugt einstückig mit einem Ringabschnitt, wie oben beschrieben, ausgebildet ist. Dabei können Klemmabschnitt, Ringabschnitt und Einführhülse vorzugsweise aus dem gleichen Material, beispielsweise Polyamid, Polyethylen, PVC, etc. gebildet sein. Vorzugsweise ist im Bereich zwischen Einführhülse und Ringabschnitt ein im Wesentlichen ringförmig verlaufender Einspritzraum vorgesehen, in den der äußere Randbereich der Elastomer-Membran zur Befestigung der Membran eingespritzt wird.

Noch weiter bevorzugt sind die Einführhülse und das Aufnahmeelement mittels einer Gewindeverbindung verbindbar, insbesondere mittels eines Außengewindes der Einführhülse, welches mit dem als Innengewinde ausgebildeten Befestigungsbereich des Aufnahmeelements zusammenwirkt. Vorzugsweise sind das Außengewinde der Einführhülse und das Innengewinde des Aufnahmeelements derart ausgebildet, dass die Einführhülse durch Rotation um die oben genannte Achse in das Aufnahmeelement eingedreht werden kann. In Abhängigkeit von der Eindrehtiefe der Einführhülse in das Aufnahmeelement werden die Innenflächen des Klemmabschnitts radial nach Innen gedrückt und somit ein durchgeführtes Kabel festgeklemmt. Beim Eindrehen der Einführhülse spürt der Anwender anhand des aufzuwendenden Drehmoments (Drehwiderstands), wie stark das Kabel bereits durch den Klemmabschnitt eingeklemmt ist. Damit wird dem Anwender ein haptisches Gefühl für die Klemmstärke bereitgestellt. Allein anhand des Drehwiderstands kann selbst ein unerfahrener Anwender einschätzen, ob das Kabel ausreichend fest im Klemmabschnitt eingeklemmt ist.

Noch weiter bevorzugt umfasst das Stutzenelement und/oder das Aufnahmeelement Metall oder besteht aus diesem. Vorzugsweise sind die Einführhülse und das Aufnahmeelement gebildet aus Metall oder einem Hart-Kunststoff, wobei der Klemmabschnitt weiter vorzugsweise aus einem reversibel elastisch verformbaren Kunststoff, beispielsweise Polyamid, Polyethylen, PVC, etc. besteht.

Noch weiter bevorzugt umfasst das Stutzenelement und/oder das Aufnahmeelement Kunststoffmaterial oder besteht aus diesem. Die bevorzugte Ausbildung des Stutzenelements aus einem Kunststoffmaterial ermöglicht einen verbesserten Herstellungsprozess der Kabeldurchführung. Im Herstellungsprozess kann der Dichtabschnitt an das Stutzenelement angespritzt werden. Durch Erwärmung des Kunststoffmaterials des Stutzenelements, während der Dichtabschnitt an das Stutzenelement angespritzt wird, bildet sich vorzugsweise eine adhesive Verbindung zwischen Dichtabschnitt und Stutzenelement. Das Stutzenelement besteht dabei vorzugsweise aus einem Thermoplast. Der Dichtabschnitt besteht vorzugsweise aus einem thermoplastischen Elastomer, beispielsweise einem thermoplastischen Polyurethan.

Es ist weiter bevorzugt, dass die Einführhülse einen Flanschabschnitt aufweist, der einen Außendurchmesser aufweist, der größer als ein Außendurchmesser einer benachbart zu dem Flanschabschnitt angeordneten Außenfläche der Einführhülse ist. Der Flanschabschnitt dient dazu, die Gehäusewandung fest zwischen Flanschabschnitt und Aufnahmeelement einzuklemmen.

Es kann weiter bevorzugt sein, dass an einer Seite des Flanschabschnitts, welche in Achsenrichtung dem Halteabschnitt zugewandt ist, ein Dichtelement, insbesondere ringförmig umlaufend, angeordnet ist. Dadurch wird beim Befestigen der Kabeldurchführung an der Gehäusewandung eine Dichtung zwischen Kabeldurchführung und Gehäusewandung erzielt. Dies erfolgt vorzugsweise durch Aufdrehen der Mutter auf das Außengewinde des durch die Gehäusewandung ragenden Halteabschnitts. Dabei wird das Dichtelement zwischen Flanschabschnitt und Gehäusewandung eingeklemmt und somit die Kabeldurchführung an das Gehäuse angedichtet.

Gemäß einer weiteren bevorzugten Fortbildung der Kabeldurchführung weist diese wenigstens eine in zumindest teilweise radialer Richtung in der Einführhülse verlaufende Halteabschnittsöffnung auf, durch die sich das Dichtelement radial nach Innen erstreckt, insbesondere derart, dass das Dichtelement integral mit dem Dichtabschnitt ausgebildet ist. Bevorzugt weist der Halteabschnitt mehrere Halteabschnittsöffnungen auf, die in Umlaufrichtung verteilt entlang des Flanschabschnitts ausgebildet sind. Das ringförmig umlaufende Dichtelement ragt jeweils durch diese Haltabschnittsöffnungen von einer Außenseite des Halteabschnitts zu einer Innenseite des Halteabschnitts. Gleichzeitig erstreckt sich der Dichtabschnitt vorzugsweise entlang einer Innenseite der Einführhülse bis zu den Halteabschnittsöffnungen derart, dass Dichtabschnitt und Dichtelement integral ausgebildet sind. Der Begriff "integral" ist im Rahmen dieser Fortbildung derart zu verstehen, dass der Dichtabschnitt und das Dichtelement einstückig ausgebildet sind.

Nach einer weiter bevorzugten Fortbildung sind der Dichtabschnitt und das Dichtelement an das Stutzenelement angespritzt. Im Herstellungsprozess erfolgt das Anspritzen beispielsweise in einem Anspritzschritt. Dabei wird ein formgebendes Werkzeug sowohl außenseitig (die Einführhülse umgebend) angeführt sowie innenseitig in die Einführhülse eingeführt. Im Anspritzschritt wird beispielsweise das flüssige Dichtmaterial (z.B. Elastomer) von der Innenseite der Einführhülse zum Bilden des Dichtabschnitts angespritzt. Dabei läuft das Dichtmaterial im flüssigen Zustand durch die Halteabschnittsöffnungen zur Außenseite des Halteabschnitts, wo es das Dichtelement ausbildet. Während des Anspritzens weist das die Einführhülse bildende Kunststoffmaterial vorzugsweise eine erhöhte Temperatur derart auf, dass das Dichtmaterial, welches Dichtabschnitt und Dichtelement ausbildet, eine adhesive Verbindung mit der Einführhülse bildet.

Die Befestigung des Dichtabschnitts und des Dichtelements an dem Stutzenelement kann vorzugsweise durch Koextrusion erfolgen, worunter zu verstehen ist, dass zwei unterschiedliche Kunststoffe in einem oder zwei aufeinanderfolgenden Spritzvorgängen zu einem Bauteil verbunden werden. Für den Herstellungsprozess der Kabeldurchführung bedeutet dies, dass das für den Dichtabschnitt und das Dichtelement verwendete Kunststoffmaterial (z.B. Elastomer) sowie das für die Einführhülse verwendete Kunststoffmaterial in einem Spritzvorgang zu einem Bauteil verbunden werden.

Eine bevorzugte Ausführungsform der Erfindung wird anhand der beiliegenden Figuren erläutert. Es zeigen:
- Fig. 1: eine erste Schnittdarstellung eines ersten Ausführungsbeispiels einer erfindungsgemäßen Kabeldurchführung,
- Fig. 2: eine zweite Schnittdarstellung der in Fig. 1 gezeigten Kabeldurchführung mit einem ersten Ausführungsbeispiel eines durchgeführten Kabels,
- Fig. 3: eine dritte Schnittdarstellung der in den Figuren 1 und 2 gezeigten Kabeldurchführung mit einem zweiten Ausführungsbeispiel eines durchgeführten Kabels,
- Fig. 4: eine erste Schnittdarstellung eines zweiten Ausführungsbeispiels einer erfindungsgemäßen Kabeldurchführung und
- Fig. 5: eine zweite Schnittdarstellung des in Fig. 4 gezeigten zweiten Ausführungsbeispiels.

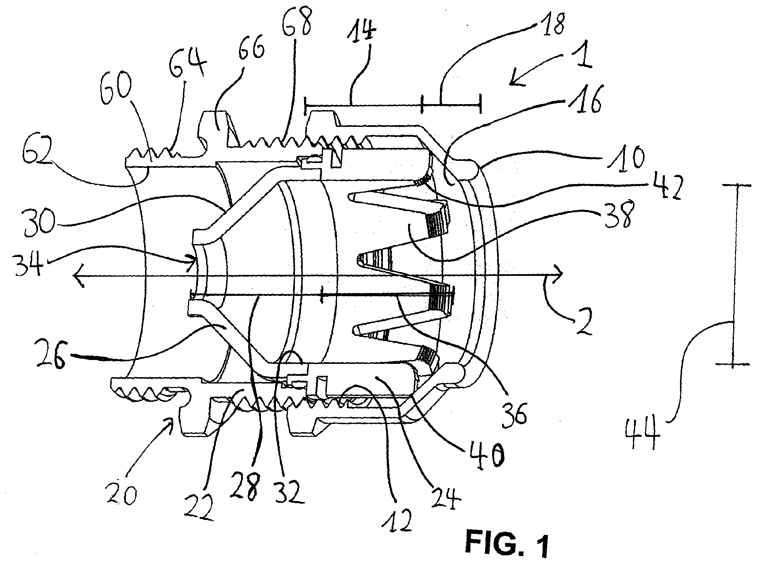

Die Figuren 1 bis 4 zeigen in unterschiedlichen Schnittdarstellungen eine Kabeldurchführung 1. D.h. die Kabeldurchführung 1 ist aufgeschnitten dargestellt, wobei der Schnitt entlang einer Achsenrichtung 2 derart erfolgt ist, dass etwa eine Hälfte der Kabeldurchführung 1 in den Figuren 1 bis 4 dargestellt ist. Gleiche und funktionsgleiche Elemente sind dabei mit denselben Bezugszeichen versehen.

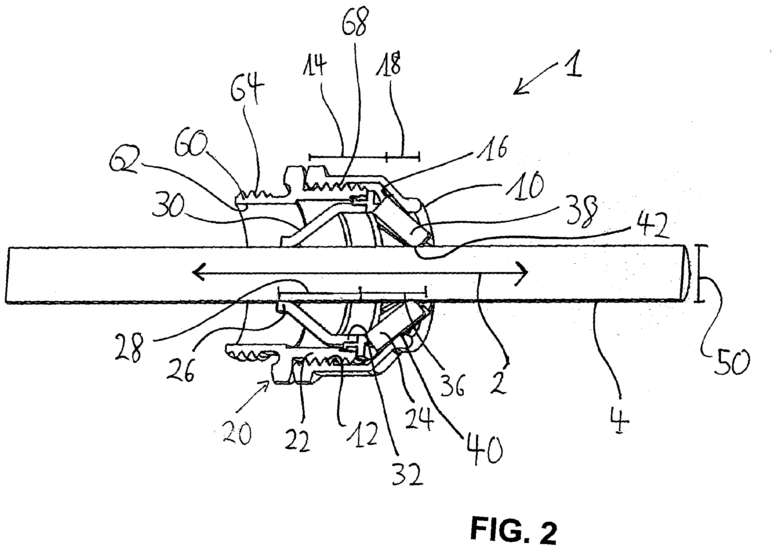

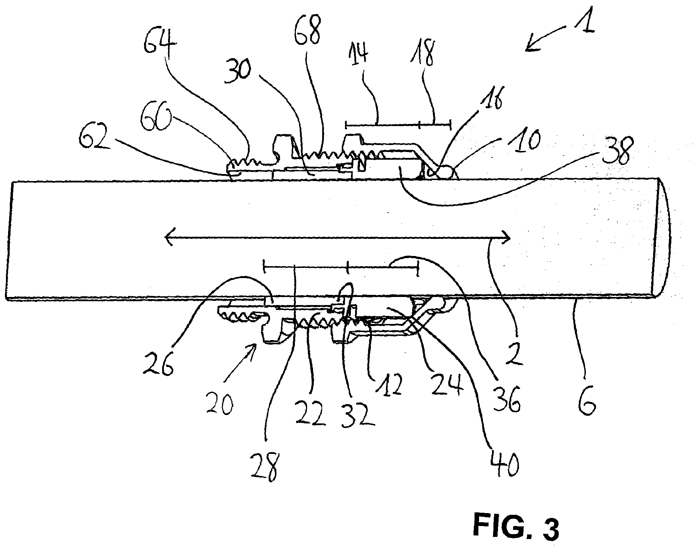

Die Figuren 1 bis 3 zeigen jeweils eine Schnittdarstellung eines ersten Ausführungsbeispiels einer Kabeldurchführung 1. Fig. 1 zeigt die Kabeldurchführung ohne durchgeführtes Kabel. Fig. 2 bzw. 3 zeigt jeweils einen Teilabschnitt eines Kabels 4 bzw. 6 in Schnittdarstellung, welches durch die Kabeldurchführung 1 hindurch verläuft.

Die Kabeldurchführung 1 weist ein Aufnahmeelement 10 auf. Das Aufnahmeelement 10 weist ein Innengewinde 12 in einem ersten Axialabschnitt 14 und eine konische Innenfläche 16 in einem zweiten Axialabschnitt 18 auf.

Die Kabeldurchführung 1 weist zudem ein Stutzenelement 20 auf, welches aus einer Einführhülse 22, einem Klemmabschnitt 24 und einem Dichtabschnitt 26 besteht. Der Dichtabschnitt 26 weist in einem Axialabschnitt 28 eine Elastomer-Membran 30 auf, die sich von einem Ringabschnitt 32 im Wesentlichen in Achsenrichtung 2 betrachtet radial nach Innen erstreckt und in Betrachtungsrichtung der Figuren 1-3 gesehen schräg von dem Ringabschnitt 32 weg-gerichtet ist (d.h. in Betrachtungsrichtung gesehen ist die Elastomer-Membran 30 in Achsenrichtung 2 weg von dem Ringabschnitt 32 gewölbt). Die Elastomer-Membran 30 bildet den Dichtabschnitt 26 des Stutzenelements 20. In einem Zentralbereich der Elastomer-Membran 30 ist eine Ausnehmung 34 ausgebildet. Diese Ausnehmung 34 ist in Achsenrichtung 2 betrachtet kreisförmig geformt und weist einen Durchmesser auf, der kleiner ist als ein Durchmesser eines Kabels 4 bzw. 6, welches im montierten Zustand durch die Ausnehmung 34 durchgeführt wird. Innerhalb eines Zentralbereichs ist die Elastomer-Membran 30 im Wesentlichen in Achsenrichtung 2 weg von dem Ringabschnitt 32 gewölbt.

In einem Axialabschnitt 36 erstrecken sich in Achsenrichtung 2 Klemmzungen 38, die einen Klemmabschnitt 24 des Stutzenelements 20 bilden. Die Klemmzungen 38 sind elastisch derart ausgebildet, dass bei einem Einführen des Stutzenelements 20 in das Aufnahmeelement 10 die Klemmzungen 38 mit ihren Außenflächen 40 gegen die konische Innenfläche 16 des Aufnahmeelements 10 stoßen. Je nachdem, wie weit das Stutzenelement 20 in das Aufnahmeelement 10 eingeführt wird, werden die Klemmzungen 38 radial nach Innen gebogen. Dabei neigen sich die dem Ringabschnitt 32 abgewandten Enden der Klemmzungen 38 radial nach Innen.

Wenn im montierten Zustand das Kabel 4 bzw. 6 durch das Stutzenelement 20 geführt ist, führt das Einführen des Stutzenelements 20 in das Aufnahmeelement 10 dazu, dass angeschrägte Innenflächen 42 der Klemmzungen 38 sich nach Innen ausrichten und das Kabel 4 festklemmen. Mit anderen Worten: in dem in Figur 1 gezeigten Zustand weisen die Innenflächen 42 eine erste Durchmesserabmessung 44 auf. Wenn das Stutzenelement 20 in eine in Figur 2 gezeigte Aufnahmeposition verbracht wird, indem es in das Aufnahmeelement 10 eingeführt wird, weist die Innenfläche 42 eine verringerte zweite Durchmesserabmessung 50 auf. Die Innenflächen 42 weisen einen Reibungskoeffizienten auf, der im Vergleich zu weiteren Oberflächen des Stutzenelements 20 erhöht ist. Dies wird dadurch erreicht, dass die Innenflächen 42 angerauht sind.

In dem in Fig. 3 gezeigten Zustand ist das Kabel 6 durch die Kabeldurchführung 1 durchgeführt. Das Kabel 6 weist einen größeren Durchmesser 50 als das in Fig. 2 gezeigte Kabel 4 auf. Der große Durchmesser 50 des Kabels 6 führt dazu, dass die Durchmesserabmessung der Innenflächen 42 nur geringfügig verringert wird, wenn das Stutzenelement 20 in das Aufnahmeelement 10 eingeführt wird.

Die in den Figuren 1-3 gezeigte Einführhülse 22 des Stutzenelements 20 weist zudem einen Halteabschnitt 60 auf, der zur Montage der Kabeldurchführung 1 durch eine Gehäusebohrung geführt werden kann. Der Halteabschnitt 60 ist als Hülse 62 mit einem Außengewinde 64 ausgebildet. Eine Mutter (nicht gezeigt) kann auf das Außengewinde 64, insbesondere auf einer dem Aufnahmeelement 10 abgewandten Seite der Gehäusewandung, aufgeschraubt werden, um die Kabeldurchführung 1 an dem Gehäuse zu befestigen. Die Einführhülse 22 weist zudem einen Flanschabschnitt 66 auf. Der Flanschabschnitt 66 hat einen Außendurchmesser, der größer als ein Außendurchmesser einer benachbart zu dem Flanschabschnitt angeordneten Außenfläche der Einführhülse ist, so dass die Hülse 62 durch die Gehäusebohrung bis zum Flanschabschnitt 66 gesteckt werden kann.

Zum Verbinden der Einführhülse 22 mit dem Aufnahmeelement 10 weist die Einführhülse 22 ein Außengewinde 68 auf, mittels dessen die Einführhülse 22 in das Aufnahmeelement 10 eingedreht werden kann. Dabei wirkt das Außengewinde 68 mit dem Innengewinde 12 des Aufnahmeelements 10 zusammen. Das Eindrehen der Einführhülse 22 in das Stutzelement 10 bewirkt, dass die Klemmzungen 38 durch die konische Innenfläche 16 nach Innen gedrückt werden und dadurch das Kabel 4 bzw. 6 eindrücken.

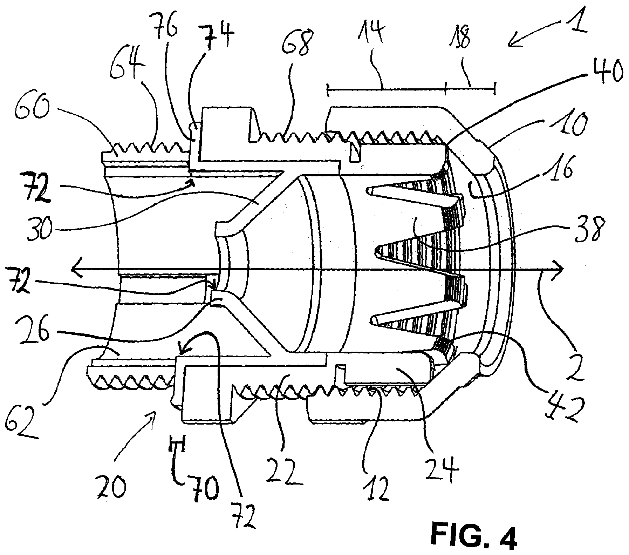

Fig. 4 zeigt eine Schnittdarstellungen eines zweiten Ausführungsbeispiels einer Kabeldurchführung 1. Die in Fig. 4 gezeigte Kabeldurchführung 1 ist ähnlich zu dem in den Figuren 1-3 gezeigten ersten Ausführungsbeispiel ausgebildet. Gleiche und funktionsgleiche Elemente sind dabei mit denselben Bezugszeichen versehen. In einem Axialabschnitt 70 weist die Hülse 62 vier Halteabschnittsöffnungen 72 auf. Ein Dichtelement 74, welches als ein den Halteabschnitt 60 umlaufender Dichtring 76 ausgebildet ist, ist an einer dem Aufnahmeelement 10 abgewandten Seite des Flanschabschnitts 66 angeordnet.

Beim Aufschrauben einer Mutter (nicht gezeigt) auf das Außengewinde 68 des Halteabschnitts 60 wird der Dichtring 76 im montierten Zustand gegen die Gehäusewandung gedrückt. Das Dichtelement 70 erstreckt sich durch die Halteabschnittsöffnungen 72 radial nach Innen derart, dass das der Dichtabschnitt 26 mit dem Dichtelement 70 einstückig an einer Innenseite der Einführhülse zusammenläuft.

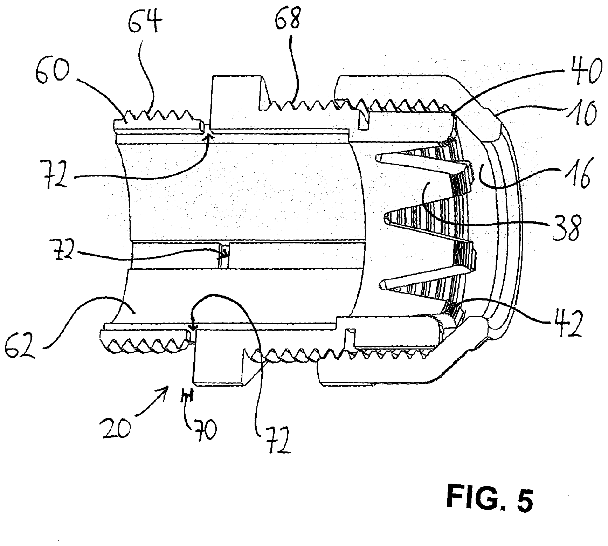

Fig. 5 zeigt eine Schnittdarstellung der in Fig. 4 gezeigten Kabeldurchführung 1 ohne das Dichtelement 74 und Dichtabschnitt 26. Gleiche Elemente wie in Fig. 4 gezeigt sind dabei mit denselben Bezugszeichen versehen.

### Bezugszeichenliste

- 1: Kabeldurchführung
- 2: Achsenrichtung
- 4: Kabel
- 6: Kabel
- 10: Aufnahmeelement
- 12: Innengewinde
- 14: Axialabschnitt
- 16: Innenfläche
- 18: Axialabschnitt
- 20: Stutzenelement
- 22: Einführhülse
- 24: Klemmabschnitt
- 26: Dichtabschnitt
- 28: Axialabschnitt
- 30: Elastomer-Membran
- 32: Ringabschnitt
- 34: Ausnehmung
- 36: Axialabschnitt
- 38: Klemmzungen
- 40: Außenflächen
- 42: Innenfläche
- 44: erste Durchmesserabmessung
- 50: zweite Durchmesserabmessung
- 60: Halteabschnitt
- 62: Hülse
- 64: Außengewinde
- 66: Flanschabschnitt
- 68: Außengewinde
- 70: Axialabschnitt
- 72: Halteabschnittsöffnungen
- 74: Dichtelement
- 76: Dichtring

## Patentansprüche

1. Kabeldurchführung zur Ein- und Durchführung eines Kabels durch eine Bohrung in einer Gehäusewandung sowie Abdichtung und Zugentlastung des Kabels, umfassend:
- ein Stutzenelement (20), welches eine Achse (2) umgibt, mit
o einem Klemmabschnitt (24) zur Halterung eines Kabels mit einer Innenfläche (42), die einen Klemmabschnitt-Innendurchmesser aufweist, und
o einem Dichtabschnitt (26), welcher ausgebildet ist, das Kabel mit dem Gehäuse abzudichten, und
- ein Aufnahmeelement (10), mit einem Befestigungsbereich zur mechanischen Befestigung an dem Stutzenelement (20) und einem Klemmbereich zur Zusammenwirkung mit dem Stutzenelement solcherart, dass bei Befestigung des Aufnahmeelements an dem Stutzenelement der Klemmabschnitt-Innendurchmesser aus einer ersten Durchmesserabmessung (44) zumindest über Abschnitte des Umfangs der Innenfläche (42) in eine zweite Durchmesserabmessung (50) gebracht wird, die kleiner als die erste Durchmesserabmessung (44) ist,
- wobei das Stutzenelement (20) eine Einführhülse (22) aufweist, die ausgebildet ist, den Klemmabschnitt (24) in eine Aufnahmeposition in Achsenrichtung (2) relativ zu dem Aufnahmeelement (10) zu stellen, und die mittels eines Verbindungsmittels mit dem Aufnahmeelement (10) verbindbar ist,
wobei,
der Dichtabschnitt (26) in Achsenrichtung (2) beabstandet von dem Klemmabschnitt (24) angeordnet ist,
die Einführhülse (22) einen Halteabschnitt (60) zum Einführen in eine Gehäusebohrung, insbesondere eine dem Aufnahmeelement (10) in Achsenrichtung (2) abgewandte Haltehülse (62), aufweist, und
die Einführhülse (22) einen Flanschabschnitt (66) aufweist, der einen Außendurchmesser aufweist, der größer als ein Außendurchmesser einer benachbart zu dem Flanschabschnitt angeordneten Außenfläche der Einführhülse ist, und
an einer Seite des Flanschabschnitts (66), welche in Achsenrichtung (2) dem Halteabschnitt (60) zugewandt ist, ein Dichtelement (74), insbesondere ringförmig umlaufend, angeordnet ist,
**gekennzeichnet durch**
wenigstens eine in zumindest teilweise radialer Richtung in der Einführhülse verlaufende Halteabschnittsöffnung (72), durch die sich das Dichtelement (74) radial nach Innen erstreckt, insbesondere derart, dass das Dichtelement (74) integral mit dem Dichtabschnitt (26) ausgebildet ist, wobei
der Dichtabschnitt und das Dichtelement an das Stutzenelement angespritzt sind.

2. Kabeldurchführung nach Anspruch 1, **dadurch gekennzeichnet, dass** der Dichtabschnitt eine Elastomer-Membran (30) umfasst oder aus dieser besteht zur Abdichtung gegen das Kabel.

3. Kabeldurchführung nach einem der vorstehenden Ansprüche, **dadurch gekennzeichnet, dass** der Dichtabschnitt (26) an das Stutzenelement (20) angespritzt ist.

4. Kabeldurchführung nach einem der vorstehenden Ansprüche, **dadurch gekennzeichnet, dass** der Klemmabschnitt (24) sich in Achsenrichtung (2) erstreckende Klemmzungen (38), die elastisch und radial beweglich ausgebildet sind, umfasst.

5. Kabeldurchführung nach einem der vorstehenden Ansprüche, **dadurch gekennzeichnet, dass** der Klemmbereich des Aufnahmeelements (10) eine angeschrägte Innenfläche (16) aufweist, die mit dem Stutzenelement (20) solcherart zusammenwirkt, dass bei Aufnahme des Stutzenelements (20) in das Aufnahmeelement (10) der Klemmabschnitt-Innendurchmesser aus der ersten Durchmesserabmessung (44) zumindest über Abschnitte des Umfangs der Innenfläche (42) in die zweite Durchmesserabmessung (50) gebracht wird.

6. Kabeldurchführung nach einem der vorstehenden Ansprüche, **dadurch gekennzeichnet, dass** die Einführhülse (22) integral mit dem Klemmabschnitt (24) ausgebildet ist.

7. Kabeldurchführung nach einem der vorstehenden Ansprüche, **dadurch gekennzeichnet, dass** die Einführhülse (22) und das Aufnahmeelement (10) mittels einer Gewindeverbindung verbindbar sind, insbesondere mittels eines Außengewindes (68) der Einführhülse (22), welches mit dem als Innengewinde (12) ausgebildeten Befestigungsbereich des Aufnahmeelements (10) zusammenwirkt.

8. Kabeldurchführung nach einem der vorstehenden Ansprüche 1-7, **dadurch gekennzeichnet, dass** das Stutzenelement (20) und/oder das Aufnahmeelement (10) Metall umfasst oder aus diesem besteht.

9. Kabeldurchführung nach einem der vorstehenden Ansprüche 1-7, **dadurch gekennzeichnet, dass** das Stutzenelement (20) und/oder das Aufnahmeelement (10) Kunststoffmaterial umfasst oder aus diesem besteht.

## Claims

1. Cable bushing for passing a cable into and through a hole in a housing wall and for sealing and strain-relieving the cable, comprising:
- a connection element (20) which encloses an axis (2), having
o a clamping portion (24) for mounting a cable, having an inner surface (42) which has a clamping portion internal diameter, and
o a sealing portion (26) which is formed to seal off the cable together with the housing, and
- a receiving element (10) comprising a fastening region for mechanical fastening to the connection element (20) and a clamping region for cooperating with the connection element in such a way that when the receiving element is fastened to the connection element the clamping portion internal diameter is brought from a first diameter dimension (44) to a second diameter dimension (50) smaller than the first diameter dimension (44) at least over portions of the periphery of the inner surface (42),
- the connection element (20) having an insertion sleeve (22) which is formed to place the clamping portion (24) in a receiving position relative to the receiving element (10) in the axial direction (2) and which can be connected to the receiving element by means of a connection means (10),
the sealing portion (26) being arranged spaced apart from the clamping portion (24) in the axial direction (2),
the insertion sleeve (22) having a holding portion (60) for insertion into a housing hole, in particular a holding sleeve (62) facing away from the receiving element (10) in the axial direction (2), and
the insertion sleeve (22) having a flange portion (66) which has an external diameter greater than an external diameter of an outer surface of the insertion sleeve arranged adjacent to the flange portion, and
a sealing element (74) being arranged, in particular extending around annularly, on a face of the flange portion (66) which faces the holding portion (60) in the axial direction (2),
**characterised by**
at least one holding portion opening (72), which extends in the insertion sleeve in an at least partially radial direction and through which the sealing element (74) extends radially inwards, in particular in such a way that the sealing element (74) is formed integral with the sealing portion (26),
the sealing portion and the sealing element being injected onto the connection element.

2. Cable bushing according to claim 1, **characterised in that** the sealing portion comprises or consists of an elastomer membrane (30) for sealing off from the cable.

3. Cable bushing according to any of the preceding claims, **characterised in that** the sealing portion (26) is injected onto the connection element (20).

4. Cable bushing according to any of the preceding claims, **characterised in that** the clamping portion (24) comprises clamping tongues (38), which extend in the axial direction (2) and are formed resiliently and radially movable.

5. Cable bushing according to any of the preceding claims, **characterised in that** the clamping region of the receiving element (10) has a bevelled inner surface (16), which cooperates with the connection element (20) in such a way that when the connection element (20) is received in the receiving element (10) the clamping portion internal diameter is brought from the first diameter dimension (44) to the second diameter dimension (50) at least over portions of the periphery of the inner surface (42).

6. Cable bushing according to any of the preceding claims, **characterised in that** the insertion sleeve (22) is formed integral with the clamping portion (24).

7. Cable bushing according to any of the preceding claims, **characterised in that** the insertion sleeve (22) and the receiving element (10) can be connected by means of a threaded connection, in particular by means of an external thread (68) of the insertion sleeve (22) which cooperates with the fastening region, formed as an internal thread (12), of the receiving element (10).

8. Cable bushing according to any of preceding claims 1-7, **characterised in that** the connection element (20) and/or the receiving element (10) comprise or consist of metal.

9. Cable bushing according to any of preceding claims 1-7, **characterised in that** the connection element (20) and/or the receiving element (10) comprise or consist of plastics material.

## Revendications

1. Passe-câble pour l'insertion et le passage d'un câble à travers un alésage dans une paroi de boîtier, ainsi que pour l'étanchéification et la décharge de traction du câble, comprenant :
- un élément de raccord (20) qui entoure un axe (2), avec
-- une portion de serrage (24) pour maintenir un câble avec une surface intérieure (42) présentant un diamètre intérieur de portion de serrage, et
-- une portion d'étanchéité (26) qui est formée pour étanchéifier le câble avec le boîtier, et
- un élément de réception (10), avec une zone de fixation pour la fixation mécanique à l'élément de raccord (20) et une zone de serrage pour la coopération avec l'élément de raccord de telle sorte que, lorsque l'élément de réception est fixé à l'élément de raccord, le diamètre intérieur de la portion de serrage est amené, au moins sur des portions de la circonférence de la surface intérieure (42), d'une première dimension de diamètre (44) à une deuxième dimension de diamètre (50) qui est inférieure à la première dimension de diamètre (44),
- dans lequel l'élément de raccord (20) présente un manchon d'insertion (22) qui est formé pour placer la portion de serrage (24) dans une position de réception en direction axiale (2) par rapport à l'élément de réception (10), et qui peut être relié à l'élément de réception (10) au moyen d'un moyen de liaison,
dans lequel,
la portion d'étanchéité (26) est disposée espacée de la portion de serrage (24) en direction axiale (2),
le manchon d'insertion (22) présente une portion de maintien (60) en vue d'une insertion dans un alésage de logement, en particulier un manchon de maintien (62) qui est détourné de l'élément de réception (10) en direction axiale (2), et
le manchon d'insertion (22) présente une portion de bride (66) qui présente un diamètre extérieur qui est supérieur à un diamètre extérieur d'une surface extérieure du manchon d'insertion disposée adjacente à la portion de bride, et
un élément d'étanchéité (74) est disposé, en particulier périphériquement en forme d'anneau, sur un côté de la portion de bride (66) qui est tourné vers la portion de maintien (60) en direction axiale (2),
**caractérisé par**
au moins une ouverture de portion de maintien (72) s'étendant au moins en partie en direction radiale dans le manchon d'insertion, à travers laquelle l'élément d'étanchéité (74) s'étend radialement vers l'intérieur, en particulier de sorte que l'élément d'étanchéité (74) est formé solidaire de la portion d'étanchéité (26), dans lequel
la portion d'étanchéité et l'élément d'étanchéité sont moulés par injection sur l'élément de raccord.

2. Passe-câble selon la revendication 1, **caractérisé en ce que** la portion d'étanchéité comprend ou est constituée d'une membrane élastomère (30) en vue d'une étanchéification par rapport au câble.

3. Passe-câble selon l'une des revendications précédentes, **caractérisé en ce que** la portion d'étanchéité (26) est moulée par injection sur l'élément de raccord (20).

4. Passe-câble selon l'une des revendications précédentes, **caractérisé en ce que** la portion de serrage (24) comprend des languettes de serrage (38) s'étendant en direction axiale (2) qui sont formées élastiques et déplaçables radialement.

5. Passe-câble selon l'une des revendications précédentes, **caractérisé en ce que** la zone de serrage de l'élément de réception (10) présente une surface intérieure biseautée (16) qui coopère avec l'élément de raccord (20) de telle sorte que, lorsque l'élément de raccord (20) est reçu dans l'élément de réception (10), le diamètre intérieur de la portion de serrage est amené, au moins sur des portions de la circonférence de la surface intérieure (42), de la première dimension de diamètre (44) à la deuxième dimension de diamètre (50).

6. Passe-câble selon l'une des revendications précédentes, **caractérisé en ce que** le manchon d'insertion (22) est formé solidaire de la portion de serrage (24).

7. Passe-câble selon l'une des revendications précédentes, **caractérisé en ce que** le manchon d'insertion (22) et l'élément de réception (10) peuvent être raccordés l'un à l'autre au moyen d'un raccord fileté, en particulier au moyen d'un filetage extérieur (68) du manchon d'insertion (22), qui coopère avec la zone de fixation de l'élément de réception (10) qui est formée comme filetage intérieur (12).

8. Passe-câble selon l'une des revendications précédentes 1 à 7, **caractérisé en ce que** l'élément de raccord (20) et/ou l'élément de réception (10) comprend du métal ou est constitué de métal.

9. Passe-câble selon l'une des revendications précédentes 1 à 7, **caractérisé en ce que** l'élément de raccord (20) et/ou l'élément de réception (10) comprend une matière plastique ou est constitué de matière plastique.
